# DEMANDE DE BREVET EUROPEEN

(11) **EP 2 055 877 A1**
(43) Date de publication de la demande: **06.05.2009**
(21) Numéro de dépôt: 08168311.2
(22) Date de dépôt: 04.11.2008
(51) Int. Cl.: E05D 5/02, F16B 11/00, B29C 65/52, E05D 9/00

(54) **Procédé de collage d'une pièce de montage sur une surface**

(30) Priorité: 05.11.2007 FR 0758776
(71) Demandeur: Adler S.A., 77230 Moussy le Neuf (FR)
(72) Inventeur: Bourgain, Eric, 75017 Paris (FR); Masson, Jean-Jacques, 94120 Fontenay sous Bois (FR)
(74) Mandataire: Barbin le Bourhis, Joël

(57) **Abrégé**

Le procédé de collage d'une pièce de montage sur une surface consiste à déposer une quantité de colle (3) sur une surface de collage (4) de la pièce de montage (1) bordée d'une rainure (5) formée dans la pièce de montage, à appliquer une pression sur les pièces à coller (1,2) et, enfin, à laisser polymériser la colle. La rainure (5) délimitant la surface de collage (4) permet de retenir d'excédent de colle déposé, lorsqu'une pression est exercée sur les pièces à coller.

## Description

L'invention se rapporte à un procédé de collage d'une pièce de montage sur un support plan, ainsi qu'à une pièce de montage destinée à être collée sur un support plan.

Plus particulièrement, l'invention permet de simplifier et d'accélérer le processus de collage d'une pièce de montage sur une surface, ainsi que d'améliorer l'aspect esthétique final dudit collage. A titre d'exemple, la pièce de montage peut être l'une des platines d'une charnière, à fixer sur un panneau de verre.

Le collage d'une pièce sur une surface en matériau translucide par exemple, présente des contraintes esthétiques. En particulier, il est préférable que le film de colle assurant l'adhérence de la pièce ne soit pas visible. Ainsi, on dépose souvent une quantité excessive de colle sur la pièce à coller puis on la laisse déborder sur les côtés. Après un grattage long et coûteux, on obtient une surface encollée homogène et correctement délimitée par les côtés de la pièce à coller. Pour éviter l'étape de grattage, certains fabricants ont proposé des masques à précoller, se présentant sous forme de films minces autocollants. Une fois ces masques positionnés, la colle est injectée dans l'espace réservé pour le collage et la pièce est pressée contre la surface translucide. Après polymérisation de la colle, on retire le masque, éliminant ainsi le surplus de colle. Ce système nécessite la fabrication de pièces supplémentaires et un nombre important d'opérations minutieuses.

La présente invention se propose de simplifier et d'accélérer le processus de collage d'une pièce de montage sur une surface en limitant le nombre de pièces et d'opérations nécessaires, tout en préservant la qualité des pièces à coller et en améliorant l'aspect esthétique final du collage.

En premier lieu, l'invention concerne un procédé de collage d'une pièce de montage sur un support plan, consistant à déposer une quantité de colle sur une surface de collage de la pièce de montage bordée par une rainure formée dans ladite pièce de montage, à appliquer une pression sur les pièces à coller et, enfin, à laisser polymériser la colle, caractérisé en ce que la colle est déposée uniquement sur une surface de collage de la pièce de montage bordée par une rainure formée dans ladite pièce de montage et permettant de retenir l'excédent de colle déposé sur la surface de collage lorsqu'une pression est exercée sur les pièces à coller et en ce qu'on repousse la colle vers une zone au niveau de laquelle la surface de collage s'évase dans la rainure par un raccordement progressif.

De préférence, la rainure est fermée sur elle-même.

Avantageusement, le dépôt de colle réalisé dans la partie médiane de la surface de collage présente une forme approximativement homothétique du contour de la rainure.

Par exemple, dans le cas où la surface de collage présente une forme circulaire, la colle est déposée sous forme d'un point centré sur ladite surface de sorte que lorsqu'une pression uniforme est exercée sur les pièces à coller, la colle s'étale en couvrant l'ensemble de la surface circulaire.

La surface de collage peut également présenter une forme elliptique. Avantageusement, le rapport défini entre la longueur du grand axe de l'ellipse et celle de son petit axe est inférieur à 2. Dans le cas d'une surface de collage de forme elliptique, la colle est déposée sur ladite surface sous forme d'une ligne centrée sur et confondue avec le grand axe de l'ellipse, de longueur déterminée, inférieure à la longueur du grand axe, de sorte que lorsqu'une pression uniforme est exercée sur les pièces à coller, la colle s'étale en couvrant l'ensemble de la surface elliptique.

Lorsque la surface est celle d'un panneau de verre, la colle, même en excès, ne s'étend pas au-delà de la rainure. Le collage obtenu a donc un aspect propre d'une géométrie choisie qui est celle de la rainure et non le résultat aléatoire de l'étalement de la colle.

En second lieu, l'invention concerne une pièce de montage, comportant une face destinée à être collée sur un support plan, ladite face comportant au moins une surface de collage bordée par une rainure permettant de retenir un excédent de colle déposé sur la surface de collage lorsque ladite pièce est appliquée sur ledit support sur lequel elle doit être fixée, et dans laquelle le raccordement entre la surface de collage et la rainure est un raccordement progressif.

Cette pièce de montage peut être par exemple l'une des platines d'une charnière de porte.

L'invention sera mieux comprise et d'autres avantages de celle-ci apparaîtront mieux à la lumière de la description qui va suivre, donnée uniquement à titre d'exemple et faite en référence aux dessins annexés dans lesquels :
- les figures 1a à 1c représentent les différentes étapes du procédé de collage selon la présente invention,
- les figures 2a et 2b représentent une coupe selon II-II d'une pièce de montage selon la présente invention, collée sur une plaque en matériau translucide,
- la figure 3 représente un exemple de pièces de montage selon la présente invention,
- la figure 4 représente un exemple de mise en oeuvre du procédé selon la présente invention,
- la figure 5 représente une vue, après collage, d'une pièce de montage selon la présente invention.

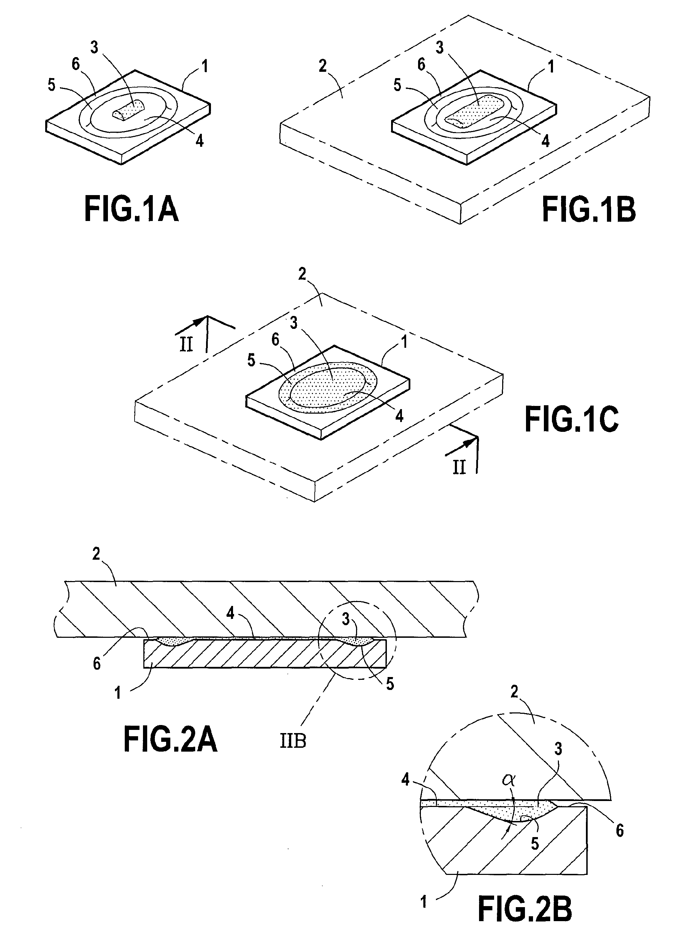

Les figures 1a à 1c représentent les différentes étapes du procédé de collage selon la présente invention.

La pièce de montage 1 pour la mise en oeuvre du procédé selon l'invention présente une surface de collage 4 circonscrite par une rainure fermée 5, et destinée à adhérer à une plaque en matériau translucide 2. Pour obtenir un collage propre et résistant, il est connu de bien dégraisser la surface de collage, et de ne laisser subsister aucune trace d'humidité résiduelle. On peut utiliser pour cela de l'alcool isopropylique par exemple. Il convient ensuite de répartir convenablement la colle sur la surface de collage 4, comme représenté sur la figure 1a. Cette répartition est difficile à doser et à centrer, de sorte qu'il est presque impossible habituellement d'obtenir une surface encollée de forme régulière prédéterminée. La colle peut toutefois être répartie différemment selon la forme de la surface de collage, de manière à obtenir un recouvrement de l'ensemble de ladite surface le plus uniforme possible.

Par exemple, dans le cas d'une surface de collage circulaire, la colle sera déposée sous forme d'un point ou d'un cercle. Dans le cas d'une surface de collage elliptique, telle que décrite sur la figure 1a, la colle sera déposée préférentiellement sous la forme d'une ligne centrée sur et confondue avec le grand axe de l'ellipse, de longueur inférieure à la longueur du grand axe de celle-ci. Ainsi, par exemple, dans le cas d'une ellipse présentant un grand axe de longueur 20.2 mm et un petit axe de longueur 13 mm, la disposition de colle doit être un tel trait de 7 mm de longueur environ. De cette manière, sous une pression uniforme, la colle atteint simultanément tous les bords de la surface elliptique. Dans le cas d'une surface à encoller rectangulaire ou carrée, on a constaté qu'une répartition homogène est obtenue en disposant la colle sous forme d'une croix grecque très arrondie.

Si la figure 1 montre une pièce de montage rectangulaire 1 munie d'une rainure 5 en forme d'ellipse, d'autres formes de rainures peuvent donc être prévues. Dans une variante, il peut même être prévu de ménager deux ou plusieurs rainures fermées sur une face de la pièce de montage à coller. La colle devra alors être répartie convenablement entre les différentes surfaces de collage. Toutefois, il a été constaté qu'un collage sur une surface elliptique, et de préférence ronde, est optimal du point de vue de la résistance à l'arrachement.

Dans une étape suivante du collage, représentée sur la figure 1b, on applique une pression entre les deux pièces à coller 1, 2 de manière à étaler la colle 3 sur l'ensemble de la surface de collage 4. La colle est repoussée vers une zone où la section d'écoulement de la colle s'évase progressivement dans la rainure. Lorsque la surface de collage est entièrement recouverte, l'excédent de colle est retenu dans la rainure 5. La colle apparaît sous la forme d'un contour transparent et régulier à peine visible sur le verre et formant élément de décor (Fig. 1c). Avantageusement, on peut maintenir les deux pièces à coller sous pression lors de la polymérisation, de manière à les garder en place et à obtenir un joint de colle le plus mince possible.

Enfin, il convient de laisser polymériser la colle suffisamment longtemps.

Sur les figures 2a et 2b, on a représenté une vue en coupe selon l'axe II-II d'une pièce de montage 1 selon la présente invention, collée sur une plaque de matériau translucide 2 et comportant une rainure fermée 5 formée sur l'une de ses faces, délimitant la surface de collage 4. Dans cette configuration, qui correspond à l'étape du procédé représenté sur la figure 1c, la surface de collage est entièrement recouverte et la rainure remplit sa fonction de rétention du trop-plein de colle.

Idéalement, si la pièce de montage que l'on souhaite coller présente une surface carrée ou rectangulaire, il convient d'y inscrire une rainure circulaire ou elliptique ayant les plus grandes dimensions possibles, tout en conservant une petite surface extérieure 6 entourant la rainure. Le raccordement entre cette surface extérieure 6 et la rainure 5 n'est soumis à aucune contrainte en dehors de besoins esthétiques. Toutefois, il est préférable de configurer la pièce de montage de sorte que la surface de collage 4 et la surface 6 entourant la rainure sont sensiblement dans un même plan. L'épaisseur de colle étant généralement négligeable, la surface 6 entourant la rainure se trouve quasiment plaquée contre la surface de matériau translucide, et les infiltrations de poussière entre la surface de matériau translucide et la surface extérieure entourant la rainure sont ainsi évitées.

La figure 2b représente une vue agrandie du raccordement entre la surface de collage 4 et la rainure fermée 5. Pour éviter que le film de colle en excès ne se déchire à l'entrée de la rainure et n'engendre des discontinuités inesthétiques visibles après polymérisation, il est préférable que la surface de collage 4 s'évase dans ladite rainure 5 par un raccordement progressif. On entend par raccordement progressif un raccordement ne présentant aucune discontinuité. La section d'écoulement de la colle 3 s'évase donc progressivement dans la rainure 5. En d'autres termes, le raccordement ne présente aucune rupture brutale dans la section d'écoulement qui est offerte à la colle, ce qui améliore à la fois l'aspect esthétique de la région périphérique de la surface de collage et la résistance du collage aux sollicitations en arrachement. On peut définir un angle de raccordement α formé entre le plan dans lequel est définie la surface de collage 4 et la tangente au bord de la rainure 5. Avantageusement, cet angle est faible. De préférence, l'angle de raccordement α a une valeur inférieure à 30°. Plus avantageusement encore, l'angle de raccordement α est fixé à 20°. Un tel raccordement très progressif limite efficacement le facteur de concentration des contraintes exercées sur le joint de colle formé dans la rainure sous des sollicitations en arrachement.

Le volume de la rainure 5 dépend de l'aire de la surface de collage 4 et tient compte de l'imprécision du volume de colle déposé. Pour assurer largement la rétention de tout débord de colle, la rainure doit représenter un volume au moins deux fois supérieur au volume de colle nécessaire à l'encollage de la surface qu'elle entoure.

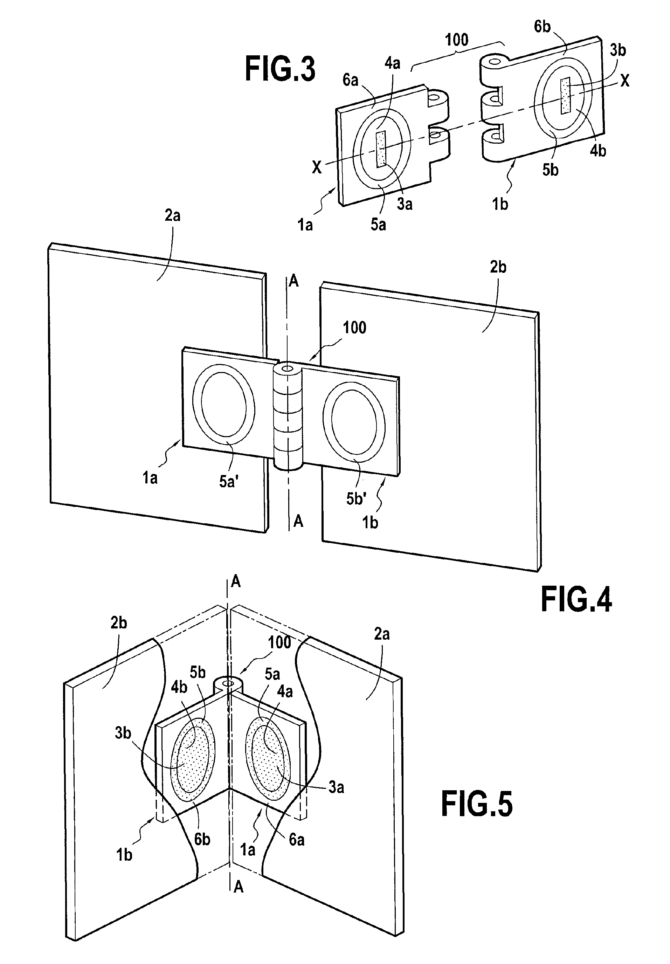

La figure 3 représente deux exemples de pièces de montage selon la présente invention, en l'occurrence, deux platines 1a et 1b d'une charnière 100 particulièrement adaptée à être collée entre deux panneaux éventuellement translucides. Chaque platine présente des caractéristiques structurelles identiques à celles de la pièce de montage selon l'invention, définie sur les figures précédentes. Les références numériques utilisées sur les figures 3 à 5 sont par conséquent les mêmes que sur les figures précédentes, mais sont suivies des lettres a ou b selon la platine à laquelle il est fait référence.

Sur les figures 4 et 5, les platines 1a et 1b formant la charnière 100 ont été collées respectivement sur deux vitres adjacentes.

La platine 1a présente deux charnons au niveau du gond. La platine 1b en présente trois. Les deux platines 1a et 1b présentent une symétrie selon un axe médian X-X perpendiculaire à l'axe de rotation A-A de la charnière. Une telle symétrie renforce la tenue du collage, en évitant la déformation apparaissant habituellement en cas de forte charge appliquée sur la charnière. Cette déformation a pour conséquence néfaste que le collage travaille en pelage, c'est-à-dire qu'apparaissent simultanément une contrainte de traction sur une petite surface collée et une contrainte de flexion sur la platine. Dans le cas d'une charnière symétrique telle que décrite sur les figures 3 à 5, la surface résistant au pelage est plus grande et la colle offre une résistance accrue car la contrainte est mieux répartie sur la hauteur du gond. L'effet de pelage est ainsi réduit et la charnière reste plate.

La figure 4 met en évidence un autre avantage possible de ce type de charnière lors de la mise en oeuvre du procédé de collage selon l'invention. Chaque platine 1a ou 1b comporte sur l'une de ses faces une rainure 5a (respectivement 5b), et sur l'autre une rainure 5a' (respectivement 5b'), de sorte que ladite platine peut être assemblée indifféremment dans un sens ou dans l'autre. Après collage, la face non-collée de chaque platine présente donc une rainure 5a' (respectivement 5b') remplissant une fonction exclusivement esthétique, tel que représenté à la figure 4. Le système est modulable, ce qui n'est pas le cas d'une charnière classique composée de deux platines à deux charnons par gond. La rainure contribue donc, d'une part, à améliorer l'esthétique de la charnière et, d'autre part, à simplifier le collage.

Sur la figure 5, on a représenté une vue montrant par transparence, à travers les portes vitrées, la surface de collage respective de chaque platine de charnière. L'étendue de la surface assurant l'adhérence de la charnière à la porte vitrée est parfaitement délimitée par les rainures 5a et 5b. Le trop-plein de colle forme une légère discontinuité à peine visible à l'intérieur même de la rainure, laquelle forme finalement un joint transparent et régulier contribuant à l'esthétique de la porte.

## Revendications

1. Procédé de collage d'une pièce de montage sur un support plan, consistant à déposer une quantité de colle sur une face de ladite pièce de montage, à appliquer une pression sur les deux pièces à coller et à laisser polymériser ladite colle, et **caractérisé**
**en ce que** la colle (3) est déposée uniquement sur une surface de collage (4) de la pièce de montage bordée par une rainure (5) formée dans ladite pièce de montage et permettant de retenir l'excédent de colle (3) déposé sur la surface de collage (4) lorsqu'une pression est exercée sur les pièces à coller, et
**en ce qu'**on repousse la colle (3) vers une zone au niveau de laquelle la section d'écoulement de la colle s'évase progressivement dans la rainure (5).

2. Procédé selon la revendication 1, **caractérisé en ce que** ladite rainure (5) bordant la surface de collage est fermée sur elle-même.

3. Procédé selon la revendication 1 ou 2, **caractérisé en ce que** le dépôt de colle (3) réalisé dans la partie médiane de la surface de collage (4) présente une forme approximativement homothétique du contour de la rainure (5).

4. Procédé selon la revendication 3, **caractérisé en ce que** ladite rainure (5) bordant la surface de collage (4) a une forme circulaire et **en ce que** la colle (3) est déposée sous forme d'un point centré sur ladite surface de sorte que lorsqu'une pression uniforme est exercée sur les pièces à coller, la colle s'étale en couvrant l'ensemble de la surface circulaire.

5. Procédé selon la revendication 3, **caractérisé en ce que** ladite rainure (5) bordant la surface de collage (4) a une forme elliptique et **en ce que** la colle (3) est déposée sur ladite surface sous forme d'une ligne centrée sur et confondue avec le grand axe de l'ellipse, de longueur déterminée, inférieure à la longueur du grand axe, de sorte que lorsqu'une pression uniforme est exercée sur les pièces à coller, la colle (3) s'étale en couvrant l'ensemble de la surface elliptique.

6. Pièce de montage, **caractérisée en qu'**elle comporte une face destinée à être collée sur un support plan (2), ladite face comportant au moins une surface de collage (4) bordée par une rainure (5) permettant de retenir un excédent de colle (3) déposé sur la surface de collage (4) lorsque ladite pièce est appliquée sur ledit support (2) sur lequel elle doit être fixée et en ce que le raccordement entre la surface de collage (4) et la rainure (5) est un raccordement progressif.

7. Pièce de montage selon la revendication 6, **caractérisée en ce que** la rainure (5) bordant la surface de collage (4) est fermée sur elle-même.

8. Pièce de montage selon la revendication 6 ou 7, **caractérisée en ce que** la rainure (5) bordant la surface de collage (4) a une forme elliptique.

9. Pièce de montage selon la revendication 8, **caractérisée en ce que** le rapport défini entre la longueur du grand axe de l'ellipse et celle de son petit axe est inférieur à 2.

10. Pièce de montage selon la revendication 6 ou 7, **caractérisée en ce que** la rainure (5) bordant la surface de collage (4) a une forme circulaire.

11. Pièce de montage selon l'une quelconque des revendications 6 à 10, **caractérisée en ce que** l'angle de raccordement (α) entre la surface de collage et la rainure est inférieur à 30°.

12. Pièce de montage selon l'une quelconque des revendications 6 à 11, **caractérisée en ce que** le volume de la rainure (5) est au moins deux fois supérieur au volume de colle (3) nécessaire à l'encollage de ladite surface de collage (4).

13. Pièce de montage selon l'une quelconque des revendications 6 à 12, **caractérisée en ce qu'**une surface (6) entourant la rainure (5) se trouve sur le même plan que la surface de collage (4).

14. Pièce de montage selon l'une quelconque des revendications 6 à 13, **caractérisée en ce qu'**elle constitue l'une des platines d'une charnière de porte (100).

15. Pièce de montage selon la revendication 14, **caractérisée en ce que** ladite charnière est composée de deux platines (1a; 1b) présentant une symétrie selon un axe médian (X-X) perpendiculaire à l'axe de rotation (A-A) de la charnière.

16. Pièce de montage selon la revendication 14 ou 15, **caractérisée en ce qu'**une platine de la charnière (100) comporte 2 charnons et la seconde platine comporte 3 charnons.
